(19) Europäisches Patentamt
European Patent Office
Office européen des brevets

(11) Veröffentlichungsnummer: **0 029 930**
**B1**

(12) # EUROPÄISCHE PATENTSCHRIFT

(45) Veröffentlichungstag der Patentschrift: **15.02.84**

(51) Int. Cl.³: **C 08 L 67/00**

(21) Anmeldenummer: **80106825.5**

(22) Anmeldetag: **06.11.80**

(54) **Verwendung von Formmassen aus Polyethylenterephthalat und einem organischen Imid zur Herstellung von kristallinen Formkörpern durch Spritzguss bei niedriger Formtemperatur.**

(30) Priorität: **19.11.79 US 95275**
**19.11.79 US 95276**

(43) Veröffentlichungstag der Anmeldung:
**10.06.81 Patentblatt 81/23**

(45) Bekanntmachung des Hinweises auf die Patenterteilung:
**15.02.84 Patentblatt 84/7**

(84) Benannte Vertragsstaaten:
**CH DE FR GB IT LI NL SE**

(56) Entgegenhaltungen:
**GB - A - 1 287 934**
**US - A - 3 624 024**
**US - A - 3 873 567**

**CHEMICAL ABSTRACTS, Band 84, Nr. 6, 9. Februar 1976, Seite 38, Zusammenfassung Nr. 319939, Columbus, Ohio, US**
**CHEMICAL ABSTRACTS, Band 83, Nr. 22, 1. Dezember 1975, Seite 56, Zusammenfassung Nr. 180336j, Columbus, Ohio, US,**
**CHEMICAL ABSTRACTS, Band 78, Nr. 12, 26. März 1973, Seite 66, Zusammenfassung Nr. 73530t, Columbus, Ohio, US**
**CHEMICAL ABSTRACTS, Band 76, Nr. 24, 12. Juni 1972, Seite 73, Zusammenfassung Nr. 142304v, Columbus, Ohio, US**

(73) Patentinhaber: **BAYER AG, Zentralbereich Patente, Marken und Lizenzen, D-5090 Leverkusen 1, Bayerwerk (DE)**

(72) Erfinder: **Bier, Peter, Dr., Bodelschwinghstrasse 18, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 029 930 B1

# Verwendung von Formmassen aus Polyethylenterephthalat und einem organischen Imid zur Herstellung von kristallinen Formkörpern durch Spritzguss bei niedriger Formtemperatur

Die beiden Polyalkylenterephthalate, die als thermoplastische Formmassen die grösste Bedeutung erlangt haben, sind Polyethylenterephthalat (PET) von Polybutylenterephthalat (PBT).

PBT hat als Spritzgussmaterial Eingang in den Markt gefunden, weil es neben Steifigkeit, Härte, Abriebfestigkeit, dynamischer und thermischer Belastbarkeit gute Verarbeitbarkeit besitzt: Es kann bei relativ niedriger Formtemperatur mit kurzer Zykluszeit verspritzt werden.

PET ist zwar ein hervorragender Faserrohstoff, kann aber für die Herstellung von Spritzgussartikeln problemlos nur dort eingesetzt werden, wo eine hohe Kristallinität nicht unbedingt erwünscht ist oder sich gar störend auswirkt, z.B. bei der Herstellung transparenter Formkörper: In amorphem Zustand (also transparent) fällt PET an, wenn es bei Formtemperaturen von 50 - 70°C verarbeitet wird. Kristallines PET erhält man dagegen erst bei Formtemperaturen von 140°C; d.h. während für die Erzeugung von PBT-Formkörpern und von amorphen PET-Formkörpern die üblichen wasserbeheizten Formen genügen (die bis zu etwa 110°C beheizt werden können), sind für die Herstellung kristalliner PET-Formkörper ölbeheizte Formen nötig. Nicht zuletzt dieser Umstand hat der weiteren Anwendung von PET-Formmassen bislang im Wege gestanden.

Zwar kann man durch Nachtempern erreichen, dass amorphes PET in den kristallinen Zustand übergeht, doch versteht sich von selbst, dass dies keine geeignete Methode für eine grosstechnische Fertigung ist. Es hat daher nicht an Bemühungen gemangelt, PET so zu modifizieren, dass er in wasserbeheizten Formen zu kristallinen Spritzgussartikeln verarbeitet werden kann, doch hat sich bis heute keine Methode technisch durchsetzen können, u.a. deshalb, weil viele Zusätze die Wärmeformbeständigkeit des PET negativ beeinflussen.

Hohe Kristallinität garantiert Härte und Formbeständigkeit auch bei höheren Temperaturen. diese hohe Kristallinität sollte so rasch wie möglich erreicht werden, um optimale Eigenschaften sicherzustellen. Ausserdem bestimmt die Verweilzeit in der Form die Länge des Spritzgusszyklus und damit die Wirtschaftlichkeit des Spritzgussverfahrens.

Es bestand also ein Bedürfnis nach einer Methode, die die geschilderten Nachteile vermeidet, die eine weitere Ausweitung des Einsatzes von PET-Formmassen bisher verhindert haben.

Überraschenderweise wurde nun gefunden, dass sich Polyethylenterephthalate, die bestimmte Imide enthalten, selbst bei Formtemperaturen von 80 bis 120°C zu Spritzgussartikeln hoher Kristallinität und ausgezeichneter Wärmeformbeständigkeit verarbeiten lassen.

Gegenstand der Erfindung ist die Verwendung thermoplastischer Polyethylenterephthalat-Formmassen enthaltend

I. 80 bis 97 Gew.-% eines Polyethylenterephthalats mit einer Intrinsic-Viskosität von mindestens 0.3 dl/g [gemessen als 0.5 gew.-%ige Lösung in Phenol/Tetrachlorethan (Gewichtsverhältnis 1 : 1) bei 25°C],
II. 3 bis 20 Gew.-% einer organischen Verbindung mit einem Schmelzpunkt über 240°C und mindestens einer Imidgruppe pro Molekül und
III. 0 bis 300 Gew.-% verstärkender Füllstoffe, wobei sich die Gew.-%-angaben jeweils auf die Summe I + II beziehen,

zur Herstellung kristalliner Polyethylenterephthalat-Formkörper mittels Spritzguss bei Formtemperaturen von 80 bis 120°C, vorzugsweise 80 bis 110°C.

Ein geeignetes Mass für die Kristallinität der erhaltenen Formkörper ist die mittels Differentialthermoanalyse (DTA) bestimmte Nachkristallisationsenthalpie $\triangle H_{c\text{-}post}$, gemessen bei einer Aufheizgeschwindigkeit von 20°/Minute: je kleiner $\triangle H_{c\text{-}post}$, desto grösser die Kristallinität. Formkörper mit der grössten erreichbaren Kristallinität weisen also einen $\triangle H_{c\text{-}post}$-Wert von Null auf. Die erfindungsgemäss hergestellten Formkörper besitzen $\triangle H_{c\text{-}post}$-Werte von weniger als 15, vorzugsweise weniger als 7.5, insbesondere weniger 3.5, Joule/g, während bei einer Formtemperatur von 100°C aus reinem PET hergestellte Formkörper einen $\triangle H_{c\text{-}post}$-Wert von 23.1 Joule/g zeigen.

Die Polyethylenterephthalate I enthalten mindestens 80, vorzugsweise mindestens 90, Mol-%, bezogen auf die Dicarbonsäurekomponente, Terephthalsäurereste und mindestens 80, vorzugsweise mindestens 90, Mol-%, bezogen auf die Diolkomponente, Ethylenglykolreste.

Die Polyethylenterephthalate I können neben Terephthalsäureresten bis zu 20 Mol-% Reste anderer aromatischer Dicarbonsäuren mit 6 bis 14 C-Atomen, aliphatischer Dicarbonsäuren mit 4 bis 8 C-Atomen und/oder cycloaliphatischer Dicarbonsäuren mit 8 bis 12 C-Atomen enthalten, wie z.B. Phthalsäure, Isophthalsäure, Naphthalin-2.6-dicarbonsäure, Phenyl-4.4'-dicarbonsäure, Adipin-, Sebacinsäure, Cyclohexandiessigsäure.

Die Polyethylenterephthalate I können neben Ethylenglykolresten bis zu 20 Mol-% anderer aliphatischer Diole mit 3 bis 12 C-Atomen, cycloaliphatischer Diole mit 6 bis 15 C-Atomen und/oder aromatische Diole mit 6 bis 21 C-Atomen enthalten, z.B. Reste von Propan-1.3-diol, Butan-1.4-diol, Pentan-1.5-diol, Hexan-1.6-diol, Cyclohexan-1.4-dimethanol, 3-Methylpentandiol-2.4, 2-Methylpentandiol-1.4, 2.2.4-Trimethylpentandiol-1.3, 2-Ethylhexandiol-1.3, 2.2-Diethylpropandiol-1.3, Hexandiol-1.3, 1.4-Di-(β-hydroxiethoxi)-benzol, 2.2-Bis-(4-hydroxicyclohexyl)-propan, 2.4-Dihydroxi-1.1.3.3-tetramethyl-cyclobutan, 2.2-Bis-(3-β-hydroxiethoxiphenyl)-propan und 2.2-Bis-(4-hydroxipropoxiphenyl)-propan.

Die Polyethylenterephthalate I können durch Einbau relativ kleiner Mengen von 3- oder 4-wertigen Alkoholen oder 3- oder 4-basischen Carbonsäuren, wie sie in der DE-OS 1900270 und der US-PS 3692744 beschrieben sind, verzweigt werden. Beispiele bevorzugter Verzweigungsmittel sind Trimesinsäure, Trimellithsäure, Trimethylolethan und -propan und

Pentaerythrit. Es ist ratsam, nicht mehr als 1 Mol-% des Verzweigungsmittels, bezogen auf die Säurekomponente, zu verwenden.

Besonders bevorzugt sind Polyethylenterephthalate I, die allein aus Terephthalsäure oder deren reaktionsfähigen Derivaten (z.B. deren Dialkylestern oder Anhydriden) und Ethylenglykol hergestellt worden sind.

Bevorzugte Gruppen organischer Imide II umfassen N.N'-Arylen-diphthalimide, worin die Arylengruppe für Phenylen, Diphenylen, Naphthylen und Sulfon-überbrücktes Bisphenylen steht, tetrabromierte Phthalimide, N.N'-Bis-(dibromcyclohexandicarboximide) mit verschiedenen Brückengliedern und N.N'-Alkylenbis-(tetrahalogenphthalimide).

Bevorzugte Imide II entsprechen der Formel

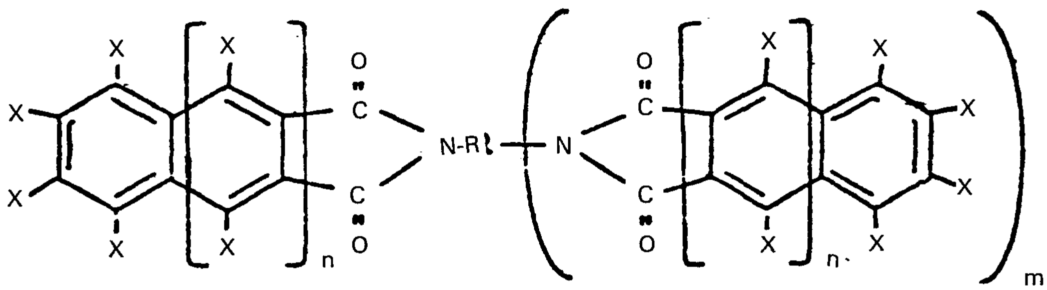

worin

X Wasserstoff oder Halogen, insbesondere Chlor oder Brom,

R ein $C_1$-$C_6$-Alkyl- oder Alkylenrest, ein Phenyl- oder Phenylenrest, ein Toluyl- oder Toluylenrest, ein Cyclohexyl- oder Cyclohexylenrest, ein Rest der Formel

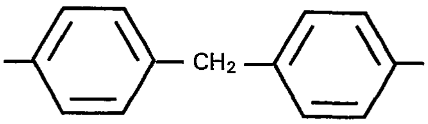

oder

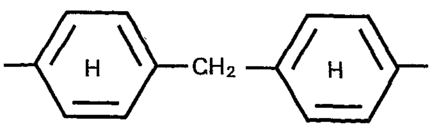

,

ein Naphthyl- oder Naphthylenrest oder eine Einfachbindung,

m, n Null oder 1 sind.

Die für die vorliegende Erfindung besonders bevorzugten N.N'-$C_1$-$C_6$-Alkylenbis-(tetrahalogenphthalimide) sowie ein Verfahren zu ihrer Herstellung sind aus der US 4 087 441 bekannt.

Die besonders bevorzugten N.N'-Alkylenbis-(tetrahalogenphthalimide) entsprechen der obigen Formel, wobei

R einen $C_1$-$C_6$-Alkylenrest, vorzugsweise einen Ethylenrest,

X Chlor, vorzugsweise aber Brom,

n Null und

m 1 bedeuten.

Das bevorzugteste N.N'-Alkylenbis-(tetrahalogenphthalimid) ist N.N'-Ethylenbis-(tetrabromphthalimid). Die Verwendung dieser Verbindung als Flammschutzmittel für Polyester, z.B. auch PET, ist bekannt (japanische Anmeldung 75 - 119 041; GB 1 287 934, US 3 624 024, 3 873 567).

Andere bevorzugte Imide umfassen 1.4.6-Tetrabrom-2.3-phthalimid, N-Methylol-tetrabrom-phthalimid, N.N'-bis-(1.4.5.6-tetrabrom-2.3-phthalimid), N.N'-p-Phenylen-ditetrachlorphthalimid, 4.4'-Di-tetrachlorphthalimid, N.N'-Bis-(5.6-dibrom-cyclohexan-2.3-dicarboximid) und N.N'-1.2-Ethan-bis-(5.6-dibromcyclohexan-2.3-dicarboximid), N.N'-p-Phenylen-diphthalimid, N.N'-Diphthalimido-diphenyl, Bis-(n-phenyl-phthalimido)-sulfon, 4.4'-Bis-(tetrachlorphthalimido)-diphenyl. N-Tetrachlorphthalimido-tetrachlorphthalimid, N.N'-Bis-(tetrabromphthalimido)-diphenyl, N-Tetrabromphthalimido-tetrabromphthalimid.

Weitere bevorzugte Imide werden in den US-PS 3 868 388, 3 873 567, 3 915 930, 3 923 734, 4 001 179, 4 003 862 und in der GB-PS 1 287 934 beschrieben.

Vorzugsweise enthalten die Formmassen weniger als 0.5 Gew.-%, vorzugsweise weniger als 0.1 Gew.-%, insbesondere keinen der folgenden Zusätze: Kohlenstoffpulver, Oxide, Sulfate, Phosphate, Silicate, Oxalate, Stearate, Benzoate, Salicylate und Tartrate der 2. Gruppe des Periodensystems und neutrale Tone. Besonders unerwünscht sind Zusätze von Graphit, Talk, Calciumbenzoat, Zinkoxid, Calciumsulfat, Calciumoxalat, Russ und Titandioxid. Die Nukleiermittel gemäss US 3 368 995 sind für die vorliegende Erfindung unnötig.

Bevorzugte verstärkende Füllstoffe III sind Glasfasern. Zusätzlich können die erfindungsgemäss zu verarbeitenden Formmassen aber auch andere verstärkende Füllstoffe, Pigmente, Farbstoffe, Stabilisatoren, Nukleiermittel, UV-Absorber, Gleit- und Entformungsmittel enthalten.

Das Mischen der Komponenten I-III und evtl. weiterer Zusätze kann auf übliche Weise, z.B. in Knetern oder Ein- bzw. Zweiwellenextrudern, erfolgen.

Die Spritzgussbedingungen für PET-Formmassen sind bekannt; vgl. US 3 516 957 und Ervin J. Rubin, Injection MoldingTheory and Praxis, Wiley Interscience, 1972.

In den folgenden Beispielen angegebene Teile bedeuten Gewichtsteile; Prozentangaben beziehen sich auf das Gewicht.

*Beispiele*

Es wurden folgende Materialien eingesetzt:

PET mit einer Intrinsic-Viskosität von 1.04 dl/g, gemessen als 0.5%ige Lösung in Phenol/Tetrachlorethan (Gewichtsverhältnis 1:1) bei 25°C («PET 1»);

PET mit einer Intrinsic-Viskosität von 0.54 dl/g, gemessen wie für PET 1 angegeben («PET 2»);

N.N'-Ethylenbis-(tetrabromphthalimid mit einem Schmelzpunkt von ca. 450°C («Imid 1»);

N-Methyltetrachlorphthalimid mit einem Schmelzpunkt von ca. 195°C («Imid 2»);

N.N'-Hexamethylenbis-(phthalimid) mit einem Schmelzpunkt von ca. 175°C («Imid 3»);

N.N'-Dodecylmethylenbis-(phthalimid) mit einem Schmelzpunkt von ca. 115°C («Imid 4»);

N.N'-Ethylenbis-(phthalimid) mit einem Schmelzpunkt von ca. 234°C («Imid 5»);

N-2-Ethylhexyl-phthalimid mit einem Schmelzpunkt von ca. 28°C («Imid 6»);

«E-Wachs», einem Diester von Ethylglykol und $C_{25}$-$C_{32}$-Monocarbonsäuren, erhalten durch Veresterung von rohem Montanwachs; und Kurzglasfasern.

Die Formmassen enthielten weniger als 0.3% Stabilisator.

Die Formmassen wurden bei einer Massetemperatur von 250°C verspritzt; die Formtemperatur betrug 100°C.

Die Spritzgussartikel sollten in bezug auf ihre Verwerfung geprüft werden. Zu diesem Zweck spritzte man Scheiben folgender Abmessungen:

10 cm Durchmesser, 3.18 mm Dicke (1/9 Zoll).

Die Zykluszeit betrug 20 sec.

Ein bei 150°C durchgeführtes Nachtempern für 24 Stunden verursachte eine Verwerfung der Scheiben. Die Angabe in mm ist ein Mass für die Tiefe der erhaltenen konkaven Gebilde; je niedriger die Zahlenangabe, desto höher der Kristallisationsgrad.

Die Mengen der Bestandteile der geprüften Formmassen in Gewichtsteilen und die Verwerfungswerte in [mm] können der Tabelle I entnommen werden.

TABELLE 1

| | Beispiel 1 | Vergleiche 1a | 1b | Beispiel 2 | Vergleiche 2a | 2b |
|---|---|---|---|---|---|---|
| PET 1 | 9 | 10 | 9 | — | — | — |
| PET 2 | — | — | — | 9 | 10 | 9 |
| Imid 1 | 1 | — | — | 1 | — | — |
| Imid 2 | — | — | 1 | — | — | 1 |
| vor Tempern | 1.45 | 4.38 | 3.85 | 1.32 | 3.52 | 3.03 |
| nach Tempern | 1.43 | 4.83 | 4.67 | 1.32 | 3.58 | 2.99 |

Im folgenden wurde die Wärmeformbeständigkeit an Normkleinstäben nach ASTM D-648 bei einer Aufheizgeschwindigkeit von 2°C/Minute und mit einer Belastung von 1,82 MPa gemessen. Die Bestandteile der geprüften Formmassen in Gewichtsteilen und die Wärmeformbeständigkeit können der Tabelle II entnommen werden.

TABELLE II

| | | | Vergleichsbeispiele | | | | | |
|---|---|---|---|---|---|---|---|---|
| | Beispiel 3 | Beispiel 4 | 4a | 4b | 4c | 4d | 4e | 4f |
| PET 1 | — | 6,3 | 6,3 | 6,3 | 6,3 | 6,3 | 6,3 | 35 |
| PET 2 | 6,3 | — | — | — | — | — | — | — |
| Glasfasern | 3 | 3 | 3 | 3 | 3 | 3 | 3 | 15 |
| Imid 1 | 0,7 | 0,7 | — | — | — | — | — | — |
| Imid 2 | — | — | 0,7 | — | — | — | — | — |
| Imid 3 | — | — | — | 0,7 | — | — | — | — |
| Imid 4 | — | — | — | — | 0,7 | — | — | — |
| Imid 5 | — | — | — | — | — | 0,7 | — | — |
| Imid 6 | — | — | — | — | — | — | 0,7 | — |
| Wärmeformbeständigkeit [°C] | 197 | 198 | 72 | 132 | 141 | 66 | 92 | 158 |

**Patentansprüche**

1. Verwendung thermoplastischer Polyethylenterephthalat-Formmassen enthaltend

I. 80 bis 97 Gew.-% eines Polyethylenterephthalats mit einer Intrinsic-Viskosität von mindestens 0.3 dl/g [gemessen als 0.5 gew.-%ige Lösung in Phenol/Tetrachlorethan (Gewichtsverhältnis 1 : 1) bei 25°C],

II. 3 bis 20 Gew.-% einer organischen Verbindung mit einem Schmelzpunkt über 240°C und mindestens einer Imidgruppe pro Molekül und

III. 0 bis 300 Gew.-% verstärkender Füllstoffe, wobei sich die Gew.-%-angaben jeweils auf die Summe I + II beziehen,

zur Herstellung kristalliner Polyethylenterephthalat-Formkörper mittels Spritzguss bei Formtemperaturen von 80 bis 120°C.

2. Verwendung nach Anspruch 1 bei Formtemperaturen von 80 bis 110°C.

**Revendications**

1. Utilisation de matières à mouler à base de polytéréphthalate d'éthylène thermoplastique, contenant

I. 80 à 97% en poids d'un polytéréphthalate d'éthylène ayant une viscosité intrinsèque d'au moins 0,3 dl/g[mesurée dans le cas d'une solution à 0,5% en poids dans du phénol/tétrachloréthane (rapport pondéral 1:1) à 25°C],

II. 3 à 20% en poids d'un composé organique ayant un point de fusion supérieur à 240°C et comportant au moins un groupe imide par molécule, et

III. 0 à 300% en poids de charge d'armature de renforcement, les données de pourcentage en poids se rapportant toujours à la somme I + II,

pour la production, par moulage par injection à des températures de moule de 80 à 120°C, d'objets moulés en du polytéréphthalate d'éthylène cristallin.

2. Utilisation selon la revendication 1, à des températures de moules de 80 à 110°C.

**Claims**

1. Use of thermoplastic polyethylene terephthalate moulding compositions containing

I. 80 to 97% weight of a polyethylene terephthalate having an intrinsic viscosity of at least 0.3 dl/g [measured as a 0.5% by weight solution in phenol/tetrachloroethane (weight ratio 1:1) at at 25°C],

II. 3 to 20% by weight of an organic compound having a melting point above 240°C and at least one imide group per molecule and

III. 0 to 300% by weight of reinforcing fillers, the percentages being based in each case on the sum of I + II,

for the production of crystalline polyethylene terephthalate mouldings by injection moulding at moulding temperatures of 80 to 120°C.

2. Use according to claim 1 at moulding temperatures of 80 to 110°C.